# EUROPÄISCHE PATENTANMELDUNG

(11) **EP 0 887 161 A2**
(43) Veröffentlichungstag der Anmeldung: **30.12.1998**
(21) Anmeldenummer: 98107508.8
(22) Anmeldetag: 24.04.1998
(51) Int. Cl.: B27G 1/00

(54) **Verfahren zum fugenschlüssigen Verbinden von Holzteilen**

(30) Priorität: 25.06.1997 DE 19726923
(71) Anmelder: Schmidt, Willi, 46499 Hamminkeln (DE)
(72) Erfinder: Schmidt, Willi, 46499 Hamminkeln (DE)
(74) Vertreter: Röther, Peter, Dipl.-Phys.

(57) **Zusammenfassung**

Bei einem Verfahren zum fugenschlüssigen Verbinden von Holzteilen, wobei ein Holzteil das Werkstück (6) und das andere Holzteil ein mit dem Werkstück zu verleimendes Ergänzungsstück ist (7), ist erfindungsgemäß vorgesehen, daß in einem ersten Arbeitsgang aus einem geeigneten plattenförmigen Material eine Schablone (1) mit positiver und eine Schablone (2) mit komplementärer negativer Verbindungslinienkontur erzeugt wird, in einem zweiten Arbeitsgang durch Abfahren der Konturkante der Positiv-Schablone (1) die entsprechende Kontur auf das Werkstück übertragen wird, in einem dritten Arbeitsgang durch Abfahren der Konturkante der Negativ-(Komplementär-)Schablone (2) die entsprechende Kontur auf das Ergänzungsstück übertragen wird und schließlich das Werkstück (6) und das Ergänzungsstück (7) entlang der einander komplementären Konturen miteinander verbunden werden.

## Beschreibung

Die Erfindung betrifft ein Verfahren zum fugenschlüssigen Verbinden von Holzteilen, wobei ein Holzteil das Werkstück und das andere Holzteil ein mit dem Werkstück zu verleimendes Ergänzungsstück ist.

Die Erfindung betrifft weiterhin ein Vorrichtungssystem zur Durchführung des Verfahrens.

Derartige fugenschlüssige Verbindungen, also praktisch fugenlose Übergange von Ergänzungsstück zu Werkstück, spielen insbesondere bei der Restaurierung oder Renovierung von Möbelstücken, Türen etc. eine wichtige Rolle.

Dabei können die angesprochenen Ergänzungsstücke sowohl Einsätze mit einer in sich geschlossenen Verbindungskontur (Fugenlinie) als auch Ansätze mit einer Verbindungskontur mit zwei Endpunkten sein.

Einsätze werden beispielsweise zur Reparatur bzw. Restaurierung schadhafter Stellen im Werkstück eingesetzt, während Ansätze einerseits ebenfalls zur Restaurierung und Reparatur schadhafter Konturen am Werkstück andererseits aber auch als gestalterische Elemente zur Schaffung ästhetischer Holzflächen eingesetzt werden können.

Bei den bekannten Methoden ist man jedoch in gestalterischer Hinsicht sehr eingeschränkt, ebenso was die Größe auszubessernder Schadstellen angeht.

So werden kleinere Schadstellen innerhalb einer ansonsten intakten Holzfläche durch Ausfräsen der Schadstelle und Einleimen eines der halbellipsoidförmigen Ausfräsung entsprechenden Einsatzes, eines sogenannten Schiffchens, ausgebessert.

Die Schiffchen sind standardisiert und vorgefertigt im Handel erhältlich. Für jede Schiffchengröße wird ein entsprechend dimensionierter Fräser benötigt. Auf jeden Fall können mit dieser Methode nur kleinere Schadstellen beseitigt werden, es sei denn, es werden mehrere Schiffchen nebeneinandergesetzt, was jedoch optisch nicht überzeugt.

Schadstellen im Randbereich eines Werkstücks, beispielsweise einer Tür oder eines Schranks, werden durch Ansätze behoben, die nach Entfernen des schadhaften Teils aus dem Werkstück an die gerade und schräg verlaufende Schnittfläche angeleimt werden.

Weder bei den oben erwähnten Einsätzen (Schiffchen) noch bei den gerade angesprochenen Ansätzen ist die Berücksichtigung der ursprünglichen Maserung zum Erhalt einer harmonisch gestalteten Oberfläche ohne weiteres möglich. Das gilt auch für die dritte Methode zur Ausbesserung von Schadstellen innerhalb einer Holzfläche. Hierbei wird aus einem entsprechenden Holzbrett oder Furnier ein runder Stopfen ausgestanzt bzw. -gefräst, der in das bei der Entfernung der Schadstelle mittels Bohrer entstandene Loch paßt. Bohrer und Stopfen bzw. Furnierplättchen müssen jeweils genau aneinander angepaßt sein. Außerdem stört die kreisrunde Verbindungskontur in der Regel die Harmonie einer gemaserten Holzoberfläche.

Der Erfindung liegt daher die Aufgabe zugrunde, ein Verfahren der eingangs genannten Art so zu führen, daß mit möglichst wenig technischem Aufwand dem jeweiligen Zweck angepaßte form- und größenunabhängige Ergänzungsstücke gefertigt und fugenschlüssig mit dem Werkstück verbunden werden können.

Eine weitere Aufgabe der Erfindung liegt darin, ein Vorrichtungssystem zur Durchführung des Verfahrens anzugeben, welches aus möglichst wenigen Teilen besteht und leicht zu handhaben ist.

Die Erfindung löst die erste Aufgabe dadurch, daß in einem ersten Arbeitsgang aus einem geeigneten plattenförmigen Material eine Positiv-Schablone mit positiver und eine Negativ-Schablone mit komplementärer negativer Schablonenkontur erzeugt wird, in einem zweiten Arbeitsgang durch Abfahren der Schablonenkontur der Positiv-Schablone die entsprechende Kontur auf das Werkstück übertragen wird, in einem dritten Arbeitsgang durch Abfahren der Schablonenkontur der Negativ-Schablone die entsprechende Kontur auf das Ergänzungsstück übertragen wird und schließlich das Werkstück und das Ergänzungsstück entlang der einander komplementären Konturen miteinander verbunden werden.

Die zweite Aufgabe wird gelöst durch zwei Schablonen mit einander komplementären Schablonenkonturen aus einem plattenförmigen Material und mindestens einer Fräsvorrichtung mit Mitteln zum Abfahren der Schablonenkontur und gleichzeitigem Einfräsen der jeweils entsprechenden Verbindungskontur in das Werkstück bzw. das Ergänzungsstück.

Weitere vorteilhafte Ausführungsformen der Erfindung sind Gegenstand der Unteransprüche.

Die Schablonen werden aus einer entsprechend dimensionierten Tafel, beispielsweise aus Sperrholz, mittels einer Laubsäge, beispielsweise einer elektromagnetischen Laubsäge, dadurch gefertigt, daß entlang der gewünschten Verbindungslinienkontur abhängig von der Größe der Schadstelle, vom zu berücksichtigenden Verlauf der Maserung im Werkstück oder von der beabsichtigten optischen Wirkung die Negativ-Schablone aus bzw. von der Tafel gesägt wird und der verbleibende Tafelteil die Positiv-Schablone bildet.

Die Positiv-Schablone wird nun auf das Werkstück so aufgelegt, daß die die Verbindungslinienkontur repräsentierende Schablonenkante beispielsweise dem Maserungsverlauf folgt. Der Fräskopf der Fräsvorrichtung, beispielsweise eine Handfräsmaschine, wird mit seiner in der Regel durch ein Kugellager gebildeten Führungseinheit entlang der Schablonenkante bewegt, wobei die Schneiden des Fräskopfes das überflüssige Werkstückmaterial entsprechend dem Verlauf der Schablonenkante wegfräsen.

In gleicher Weise wird mit der Negativ-Schablone auf dem Material für das Ergänzungsstück verfahren.

Somit entstehen zwei einander absolut komplementäre Verbindungskanten, entlang derer Werkstück und Ergänzungsstück praktisch fugenlos miteinander verleimt werden können.

Bezüglich Form und Größe der Schablonen und damit der Einsätze bzw. Ansätze sind im Rahmen des Einsatzzweckes praktisch keine Grenzen gesetzt. Somit kann das erfindungsgemäße Verfahren nicht nur zum Ausbessern von Werkstücken eingesetzt werden, sondern auch zur kompletten Neugestaltung, beispielsweise von Schrank- oder Wohnungstüren. Die Türblätter können beispielsweise aus verschiedenen bzw. verschiedenfarbigen Hölzern zusammengesetzt werden, wobei die Verbindungslinien einen unregelmäßigen oder auch geometrisch regelmäßigen Verlauf aufweisen können. So ist es mit dem erfindungsgemäßen Verfahren auch möglich, kompliziertere Muster der Holzfläche zu erhalten, indem die Verfahrensschritte nach Verleimen und Abbinden von Werkstück und Ansatzstück mit konturverschiedenen Schablonen (eventuell auch mehrfach) wiederholt werden, so daß sich beispielsweise flechtmusternähnliche Flächenstrukturen ergeben. Darüber hinaus können mit dem erfindungsgemäßen Verfahren durch höhenversetztes Verbinden der Segmente oder durch Segmente unterschiedlicher Dicke Reliefoberflächen erzeugt werden.

Bei der Herstellung von Positiv- und Negativ-Schablone, bei der die Negativ-Schablone entlang einer in sich geschlossenen Kurve aus der Tafel herausgesägt wird, ist die Schnittbreite zu berücksichtigen, da nach dem Aussägen die Abmessungen der Negativ-Schablone geringfügig kleiner sind als die Abmessungen der in der Tafel entstandenen Ausschnittöffnung. Zur Kompensation wird daher die Positiv-Schablone gemäß Patentanspruch 6 durch mindestens drei, vorteilhafterweise vier Schnitte zerteilt und anschließend entlang der Schnittkanten wieder zusammengeleimt. Hierdurch wird die Kongruenz zwischen Ausschnittöffnung und Negativ-Schablone wieder hergestellt.

Zum Übertragen der Schablonenkontur auf das Werkstück bzw. das Ergänzungsstück kann ein Fräskopf verwendet werden, dessen Schneidkante mit dem Umfang des Führungselementes fluchtet. Somit entstehen im Querschnitt gerade Verbindungskanten, die stumpf aufeinandergeleimt werden.

Es ist jedoch gemäß Anspruch 8 auch möglich, zwei einander komplementäre Stufenfräser zu verwenden, wodurch Verbindungskanten entstehen, die im Querschnitt stufenförmig ausgebildet sind, wobei stufenförmig auch bedeuten kann, daß eine Verbindung nach Art von Nut und Feder entsteht. Eine derartige Nut-Feder-Verbindung ist jedoch naturgemäß nur bei Ansätzen sinnvoll, während bei Einsätzen entweder die im Querschnitt geraden Verbindungskanten oder eine eine sogenannte Überblattung erzeugende stufenförmige Verbindungskantenkombination verwirklicht werden können.

In jedem Fall wird durch das erfindungsgemäße Verfahren ein Produkt erhalten, bei dem eine Nachbearbeitung in Form von bündig Hobeln, Fräsen, Beischleifen etc. Beischleifen etc. nicht mehr notwendig ist.

Das Vorrichtungssystem zur Durchführung des erfindungsgemäßen Verfahrens besteht im wesentlichen aus den zwei Schablonen und mindestens einer Fräsvorrichtung, wobei jedoch auch gerade bei der stufenförmig ausgestalteten Verbindung zwei Fräsen eingesetzt werden können, von denen jede einen entsprechenden Fräskopf trägt.

Die Schablonen können mittels der Laubsäge für jeden Einsatzzweck an Ort und Stelle individuell hergestellt werden. Denkbar ist jedoch auch, daß für bestimmte Standardeinsatzzwecke vorgefertigte Schablonen wiederholt eingesetzt werden können.

Die Erfindung wird im folgenden anhand von zwei Beispielen in den Zeichnungen dargestellt und näher erläutert.

Es zeigen:
- Fig. 1a:: Positiv-Schablone zur Anfertigung eines Einsatzes,
- Fig. 1b:: entsprechende Negativ-Schablone,
- Fig. 1c:: mit dem Einsatz versehenes Werkstück,
- Fig. 2a:: Positiv-Schablone für einen Ansatz,
- Fig. 2b:: entsprechende Negativ-Schablone,
- Fig. 2c:: mit dem Ansatz versehenes Werkstück,
- Fig. 3:: Produkt bei wiederholter Anwendung des Verfahrens.

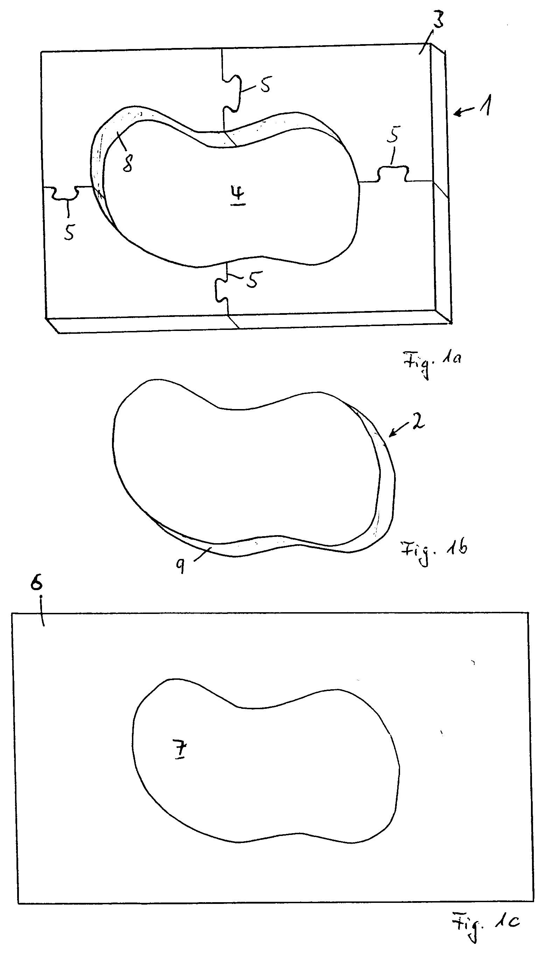

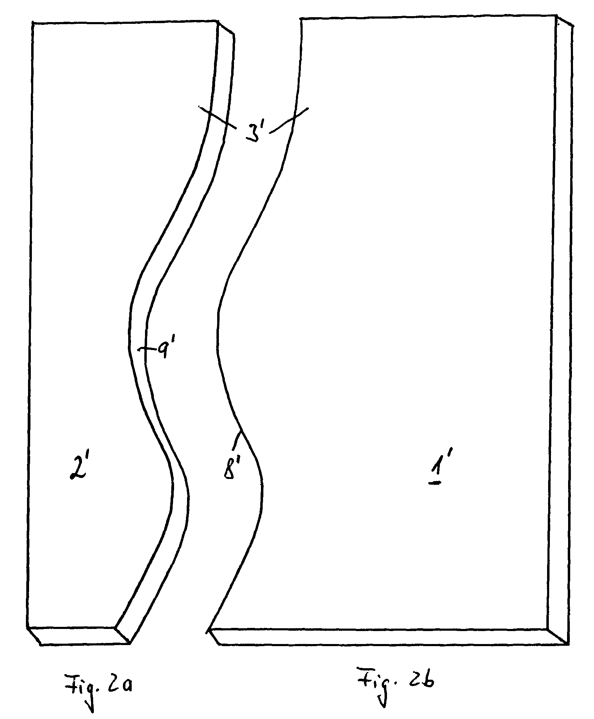

Fig. 1a und 1b zeigen eine Positiv- und eine Negativ-Schablone, die mit den Bezugszeichen 1 und 2 bezeichnet sind.

Die Negativ-Schablone 2 ist durch Aussägen mit einer Laubsäge aus beispielsweise einer Sperrholzplatte 3 hergestellt, wobei die Restplatte die Positiv-Schablone 1 darstellt.

Da durch das Aussägen und der damit verbundenen zwangsläufigen endlichen Schnittbreite der Flächeninhalt der Negativ-Schablone 2 kleiner ist als der Flächeninhalt der Ausschnittöffnung 4 in der Positiv-Schablone 1, die Schablonenkonturen 8, 9 sowohl der Positiv-Schablone 1 als auch der Negativ-Schablone 2 aber möglichst exakte Kongruenz aufweisen sollen, ist die Positiv-Schablone 1 von vier Seiten zur Ausschnittöffnung 4 hin zersägt worden, wobei die Breite dieser Schnitte 5 gleich ist der Schnittbreite beim Aussägen der Negativ-Schablone 2.

Nach dem Zersägen der Positiv-Schablone 1 werden die vier Einzelteile wieder zusammengefügt und geleimt, so daß die oben aufgezeigte Diskrepanz behoben ist.

Die Schnitte 5 sind mäanderförmig geführt, damit zum einen das Wiederzusammenfügen vereinfacht und zum anderen eine bessere Stabilität durch Vergrößerung der Klebefläche gewährleistet ist.

Die in den Fig. 1a und 1b dargestellten Schablonen 1 und 2 sind beispielsweise zur Restaurierung eines Möbelstücks, das eine Schadstelle in einer seiner Holzflächen aufweist, geeignet. Hierzu wird die Positiv-Schablone 1 so auf die zu bearbeitende Holzfläche (Werkstück 6) gelegt, daß die Schablonenkontur 8 die Schadstelle vollständig umgibt. Mit einer Fräse wird nun die Schadstelle entlang der Schablonenkontur 8 ausgefräst, indem die oberhalb der eigentlichen Fräskopfschneiden befindliche Abrollfläche entlang der Konturkante der Positiv-Schablone 1 geführt wird.

Dann wird die Negativ-Schablone 2 auf ein geeignetes Holzbrett gelegt und mit der Fräse in analoger Weise ein dem Umriß der Negativ-Schablone 2 entsprechendes Ergänzungsstück 7 ausgefräst. Dieses Ergänzungsstück 7 bildet den Einsatz, der in die ausgefräste Öffnung im Werkstück 6 eingefügt und mit diesem verleimt wird, wie es in der Fig. 1c dargestellt ist.

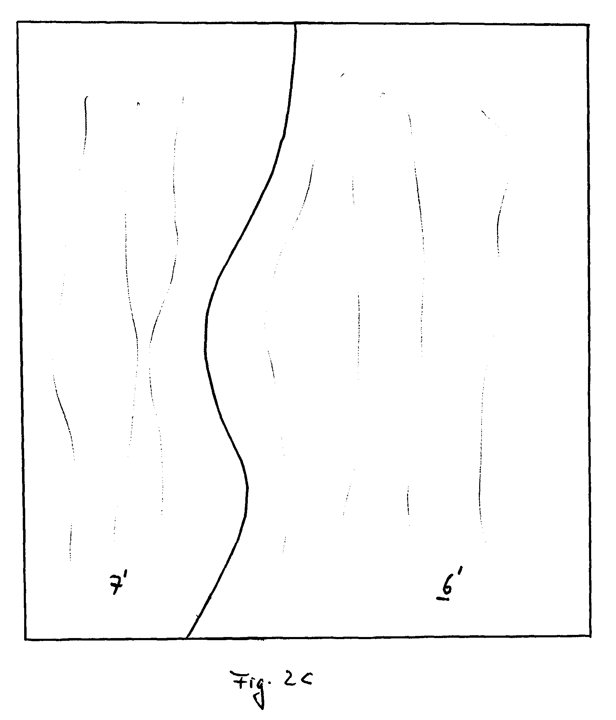

In den Fig. 2a und 2b sind ebenfalls zwei Schablonen dargestellt, von denen die in Fig. 2a gezeigte die Negativ-Schablone 2' ist, die durch Absägen von einer Sperrholzplatte 3' hergestellt ist. Das nach dem Absägen der Negativ-Schablone 2' übrigbleibende Stück der Sperrholzplatte 3' bildet die Positiv-Schablone 1'.

Derartige Schablonen 1', 2' dienen beispielsweise dazu, schadhafte Randstellen an Möbeln, Türen etc. auszubessern bzw. zu restaurieren. Ebenso wie mit den Schablonen 1 und 2 können mit den Schablonen 1' und 2' aber auch Holzflächen neugestaltet werden, indem durch die Fugenführung, die Holzsorten und -farben besondere optische Effekte erreicht werden.

Die Vorgehensweise ist bei der Handhabung der Schablonen 1' und 2' analog der Handhabung der Schablonen 1 und 2.

Die Schablonen 1 und 1' sowie 2 und 2' können Vorort jeweils individuell auf die Situation abgestellt gefertigt werden, wobei die Schablonenkonturen 8, 8' und 9, 9' beispielsweise der vorhandenen Maserung im Werkstück 6, 6' angepaßt werden oder aber zu Mustern führen, die dem Werkstück 6, 6' einen neuen ästhetischen Gesamteindruck vermitteln.

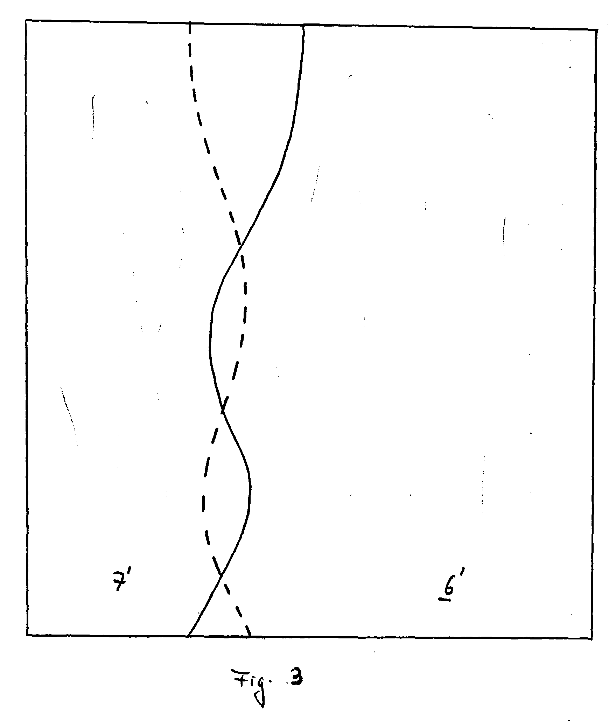

In der Fig. 3 ist eine Alternative dargestellt, bei der das oben beschriebene Verfahren wiederholt angewendet wird. D.h., daß das durch die einmalige Anwendung des Verfahrens erzeugte Produkt mit einem Satz konturverschiedener Schablonen durch Wiederholung des erfindungsgemäßen Verfahrens erneut bearbeitet wird, so daß sich beispielsweise die in der Fig. 3 angedeutete flechtartige Ausgestaltung der Oberfläche ergibt.

## Patentansprüche

1. Verfahren zum fugenschlüssigen Verbinden von Holzteilen, wobei ein Holzteil das Werkstück und das andere Holzteil ein mit dem Werkstück zu verleimendes Ergänzungsstück ist,
dadurch gekennzeichnet,
daß in einem ersten Arbeitsgang aus einem geeigneten plattenförmigen Material eine Positiv-Schablone (1,1') mit positiver und eine Negativ-Schablone (2,2') mit komplementärer negativer Schablonenkontur (8,8';9,9') erzeugt wird, in einem zweiten Arbeitsgang durch Abfahren der Konturkante der Positiv-Schablone (1,1') die entsprechende Kontur auf das Werkstück (6,6') übertragen wird, in einem dritten Arbeitsgang durch Abfahren der Konturkante der Negativ-Schablone (2,2') die entsprechende Kontur auf das Ergänzungsstück (7,7') übertragen wird und schließlich das Werkstück (6,6') und das Ergänzungsstück (7,7') entlang der einander komplementären Konturen miteinander verbunden werden.

2. Verfahren nach Anspruch 1,
dadurch gekennzeichnet,
daß nach dem Verleimen und Abbinden von Werkstück (6,6') und Ergänzungsstück (7,7') die Verfahrensschritte einmal oder mehrfach wiederholt werden.

3. Verfahren nach Anspruch 1 oder 2,
dadurch gekennzeichnet,
daß die Übertragung der Schablonenkonturen (8,8';9,9') von den Schablonen (1,1';2,2') auf das Werkstück (6,6') bzw. das Ergänzungsstück (7,7') durch Fräsen erfolgt.

4. Verfahren nach einem der Ansprüche 1 bis 3,
dadurch gekennzeichnet,
daß Positiv- und Negativ-Schablone (1',2') durch Zersägen einer Tafel des plattenförmigen Materials entlang der gewünschten Schablonenkontur (8',9') gleichzeitig erzeugt werden, wobei die Kontur zwei Endpunkte aufweist.

5. Verfahren nach einem der Ansprüche 1 bis 3,
dadurch gekennzeichnet,
daß die Positiv-Schablone (1) durch Aussägen der Negativ-Schablone (2) aus dem tafelförmigen Material entlang der gewünschten Schablonenkontur (8,9) erzeugt wird, wobei die Kontur eine in sich geschlossene Kurve bildet.

6. Verfahren nach Anspruch 5,
dadurch gekennzeichnet,
daß nach dem Aussägen der Negativ-Schablone (2) die verbleibende Positiv-Schablone (1) durch mindestens drei Schnitte (5) zerteilt und anschließend entlang der Schnittkanten wieder zusammengeleimt wird.

7. Verfahren nach einem der Ansprüche 1 bis 6,
dadurch gekennzeichnet,
daß in das Werkstück (6,6') und das Ergänzungsstück (7,7') stumpf aufeinanderstoßende Verbindungskonturen eingefräst werden.

8. Verfahren nach einem der Ansprüche 1 bis 6,
dadurch gekennzeichnet,
daß in das Werkstück (6,6') und das Ergänzungsstück (7,7') einander komplementäre, im Querschnitt stufige Verbindungskonturen eingefräst werden.

9. Verfahren nach einem der Ansprüche 1 bis 8,
dadurch gekennzeichnet,
daß Positiv-Schablone (1,1') bzw. Negativ-Schablone (2,2') auf das Werkstück (6,6') bzw. das Ergänzungsstück (7,7') aufgelegt wird, das Fräswerkzeug mit einem Abrollelement entlang der Schablonenkontur (8,8';9,9') der Schablone 1,1';2,2') entlanggeführt wird, wobei hierbei gleichzeitig die entsprechende Kontur in das Werkstück (6,6') bzw. das Ergänzungsstück (7,7') eingefräst wird.

10. Vorrichtungssystem zur Durchführung des Verfahrens nach einem der Ansprüche 1 bis 9,
gekennzeichnet durch
zwei Schablonen (1,1';2,2') mit einander komplementären Schablonenkonturen (8,8';9,9') aus einem plattenförmigen Material und mindestens eine Fräsvorrichtung mit Mitteln zum Abfahren der Schablonenkontur (8,8';9,9') und gleichzeitigem Einfräsen der jeweils entsprechenden Verbindungskontur in das Werkstück (6,6') bzw. das Ergänzungsstück (7,7').

11. Vorrichtungssystem nach Anspruch 10,
dadurch gekennzeichnet,
daß die Mittel zum Einfräsen Stufenfräser mit einander komplementär ausgebildeten Fräsköpfen sind.

12. Vorrichtungssystem nach Anspruch 10,
dadurch gekennzeichnet,
daß die Mittel zum Einfräsen jeweils zwei einander komplementäre Fräsköpfe sind, etwa Zinkenfräser oder Nut- und Federfräser oder Fräser mit zur Oberfläche schräg gestellter Schnittlinie.

13. Vorrichtungssystem nach einem der Ansprüche 10 bis 12,
dadurch gekennzeichnet,
daß die Schablonen (1,1';2,2') aus Sperrholz bestehen.

14. Vorrichtungssystem nach einem der Ansprüche 10 bis 12,
dadurch gekennzeichnet,
daß die Schablonen (1,1';2,2') aus einem geeigneten Kunststoff bestehen.
